**Europäisches Patentamt**

**European Patent Office**

**Office européen des brevets**

(19)

(11) Veröffentlichungsnummer : **0 113 844**
**B1**

(12)
# EUROPÄISCHE PATENTSCHRIFT

(45) Veröffentlichungstag der Patentschrift :
22.02.89

(51) Int. Cl.⁴ : **B 60 T 13/68**

(21) Anmeldenummer : 83111990.4

(22) Anmeldetag : 30.11.83

(54) Steuereinrichtung für elektropneumatische Druckluftbremsen von Schienenfahrzeugen.

(30) Priorität : 14.01.83 DE 3301097

(43) Veröffentlichungstag der Anmeldung :
25.07.84 Patentblatt 84/30

(45) Bekanntmachung des Hinweises auf die Patenterteilung : 22.02.89 Patentblatt 89/08

(84) Benannte Vertragsstaaten :
CH DE FR GB LI

(56) Entgegenhaltungen :
FR-E- 67 994
US-A- 3 650 572

(73) Patentinhaber : KNORR-BREMSE AG
Moosacher Strasse 80 Postfach 401060
D-8000 München 40 (DE)

(72) Erfinder : Krause, Friederich
Ehlerstrasse 4
D-8000 München 90 (DE)

**Beschreibung**

Die Erfindung bezieht sich auf eine Steuereinrichtung für elektropneumatische Druckluftbremsen von Schienenfahrzeugen, mit einem handbetätigbaren, einen Vorsteuerdruck überwachenden Vorsteuerventil zur Steuerung eines Hauptluftleitungsdruckes, mit einer am Vorsteuerventil angeordneten, nur während des Verstellens des Vorsteuerventils in Löserichtung sich schließende Kontakte aufweisenden, ersten elektrischen Schalteinrichtung zur Ansteuerung einer eine Selbsthalteeinrichtung aufweisenden, die Erregung eines Brems- und eines Lösestromkreises überwachenden, elektrischen Relaiseinrichtung, mit einer von einem vom Vorsteuer- entgegen dem Hauptluftleitungsdruck beaufschlagten Kolben schaltbaren, zweiten elektrischen Schalteinrichtung zum Überwachen der Relaiseinrichtung, und mit vom Brems- bzw. Lösestromkreis erregbaren Magnetventilen zur Steuerung des Hauptluftleitungsdruckes.

Eine derartige Steuereinrichtung ist aus der DE-C 1 605 260 bekannt. Bei dieser bekannten Steuereinrichtung ist die elektrische Relaiseinrichtung nur nach Ansprechen der zweiten, elektrischen Schalteinrichtung ansteuerbar, d. h., der Brems- bzw. Lösestromkreis ist nur nach Verschieben des Kolbens durch eine Druckdifferenz zwischen Vorsteuer- und Hauptluftleitungsdruck erregbar. Hieraus folgt, daß bei kleinen Steuervorgängen am Vorsteuerventil, welche nur eine kleine, zum Auslenken des Kolbens nicht ausreichende Änderung des Vorsteuerdruckes bewirken, die elektrische Relaiseinrichtung nicht anspricht und der Brems- bzw. Lösestromkreis nicht erregt wird. Die kleinen Steuervorgänge können also nur rein pneumatisch und demgemäß bei längeren Zugverbänden mit entsprechend großer, zeitlicher Verzögerung vollzogen werden. Im übrigen ist die bekannte Steuereinrichtung derart ausgestaltet, daß bei in der Hauptluftleitung auftretenden Druckabsenkungen bei konstant bleibendem Vorsteuerdruck keine Gegensteuerung durch Erregen des Lösestromkreises erfolgen kann, vom Zug aus erfolgende Notbremsungen also ungestört und rasch zur Auswirkung gelangen können. Bei Drucksteigerungen in der Hauptluftleitung dagegen, wie sie beispielsweise durch Temperaturänderungen oder Schwingungsvorgänge bewirkt sein können, kann die bekannte Steuereinrichtung ansprechen und durch Erregen des Bremsstromkreises ein unerwünschtes und überzogenes Gegensteuern bewirken.

Der Erfindung liegt die Aufgabe zugrunde, eine Steuereinrichtung der eingangs genannten Art derart auszugestalten, daß auch kleine, am Vorsteuerventil bewirkte Steuervorgänge durch entsprechend kurzzeitiges Erregen des Brems- bzw. Lösestromkreises rasch zur Auswirkung gelangen können, wobei zugleich sichergestellt sein soll, daß allein in der Hauptluftleitung auftretende Druckänderungen weder zu einer Erregung des Löse- noch des Bremsstromkreises führen können. Zudem soll die zu schaffende Steuereinrichtung ebenso wie die bekannte Steuereinrichtung bei größeren Steuervorgängen am Vorsteuerventil den Brems- bzw. Lösestromkreis nur so lange erregen können, bis der Hauptluftleitungsdruck an den geänderten Vorsteuerdruck angeglichen ist.

Diese Aufgabe wird nach der Erfindung dadurch gelöst, daß die erste Schalteinrichtung weitere, sich nur beim Verstellen des Vorsteuerventils in Bremsrichtung schließende Kontakte aufweist, daß die Relaiseinrichtung bei ihrer Ansteuerung die von den Kontakten der ersten Schalteinrichtung überwachten Stromkreise direkt oder indirekt unterbrechende Kontakte aufweist, und daß die Selbsthalteeinrichtung von den Kontakten der zweiten Schalteinrichtung ein- und ausschaltbar ist.

Durch diese Ausbildung der Steuereinrichtung wird erreicht, daß die Relaiseinrichtung nach ihrer Ansteuerung von seiten der ersten Schalteinrichtung bei ihrem Ansprechen diese Ansteuerung selbst wieder unterbricht, wodurch kleine Steuervorgänge durch nur sehr kurzzeitiges Erregen des Brems- bzw. Lösestromkreises feinfühlig, dabei jedoch sehr schnell über die ganze Zuglänge in entsprechend geringe Änderungen des Hauptluftleitungsdruckes übertragbar sind. Bei größeren, mittels des Vorsteuerventils eingeleiteten Steuervorgängen spricht dagegen mit der zweiten Schalteinrichtung die Selbsthalteeinrichtung an und hält die Relaiseinrichtung nach ihrem Ansprechen bis zum jeweiligen Druckausgleich zwischen Vorsteuer- und Hauptluftleitungsdruck erregt, so daß auch die größeren Steuervorgänge rasch und genau über die ganze Zuglänge in entsprechend größere Druckänderungen der Hauptluftleitungen übertragbar sind. Bei alleiniger Änderung des Hauptluftleitungsdruckes dagegen vermag nur die zweite Schalteinrichtung anzusprechen, die Selbsthalteeinrichtung vermag jedoch die noch nicht erregte Relaiseinrichtung nicht zu erregen und die Relaiseinrichtung mit dem Brems- bzw. Lösestromkreis verbleiben in Ruhe, so daß kein unerwünschtes Gegensteuern erfolgen kann.

In den Unteransprüchen sind vorteilhafte Ausgestaltungsmöglichkeiten für nach dem Hauptanspruch ausgebildete Steuereinrichtungen aufgezeigt.

In der Zeichnung ist ein Ausführungsbeispiel für eine nach der Erfindung ausgebildete Steuereinrichtung dargestellt und zwar zeigt

Figur 1 schematisiert den Gesamtaufbau der Steuereinrichtung und

Figur 2 eine Einzelheit am Vorsteuerventil in ebenfalls schematischer Darstellung.

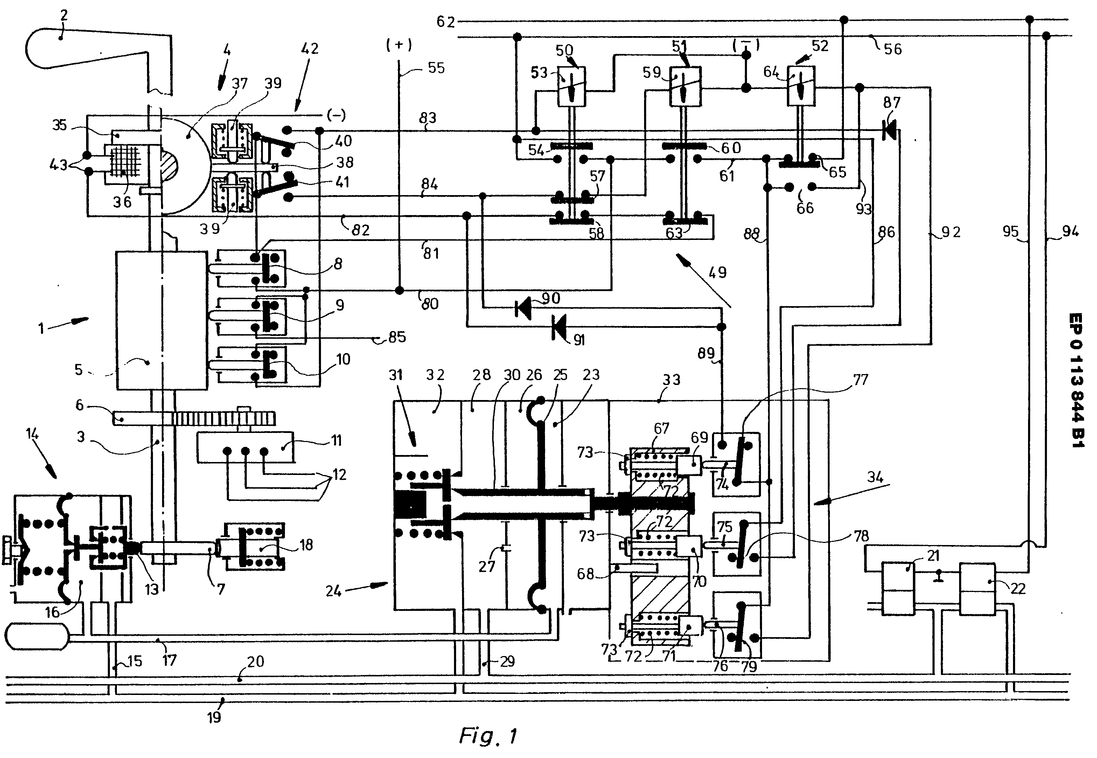

Die Steuereinrichtung weist gemäß Fig. 1 ein Vorsteuerventil 1 auf, welches als Handbetätigungsglied eine mittels eines Handgriffes 2 drehbare Welle 3 besitzt. Auf der Welle 3 sind nebeneinander eine später im einzelnen zu erläuternde Kupplung 4, eine Nockenwalze 5, ein Zahnrad 6 und eine Kurvenscheibe 7 angeordnet. Die Nockenwalze 5 weist mehrere, nicht dargestellte Nockenbereiche auf, welche mit zumindest drei elektrischen Kontakten 8, 9 und 10 zusammenwirken und diese Kontakte in bestimmten Drehstellungen der Welle 3 geöffnet bzw. geschlossen halten. Weiterhin kann die Nockenwalze 5 in üblicher, nicht dargestellter Weise zur Betätigung pneumatischer Ventile, beispielsweise eines Schnellbrems- und/oder eines Absperrventils dienen. Das Zahnrad 6 kämmt mit dem Antriebsritzel einer üblichen, bekannten Steuervorrichtung 11 für eine reibungsfreie Bremse, beispielsweise eine elektrodynamische Bremse ; die nicht dargestellte, reibungsfreie Bremse ist über die Kabel 12 an die Steuervorrichtung 11 angeschlossen. Die Kurvenscheibe 7 wirkt mit dem Einstellstößel 13 eines pneumatischen Druckreglers 14 zusammen. Der Druckregler 14 ist in seinem Aufbau und seiner Funktion bekannt, sein Aufbau und seine Funktionsweise sind beispielsweise in der DE-OS 1 605 239 im einzelnen ausführlich beschrieben. Eine Beschreibung des Druckreglers 14 erübrigt sich somit, es ist lediglich festzustellen, daß entsprechend der jeweiligen Drehlage der Kurvenscheibe 7 der Einstellstößel 13 in eine bestimmte, axiale Lage eingestellt wird und der über eine Rohrleitung 15 mit Druckluft versorgte Druckregler 14 in seinen Raum 16 und die an diesen angeschlossene Rohrleitung 17 eine entsprechende Druckhöhe — einen Vorsteuerdruck — einsteuert. Auf einem in keiner Drehlage der Welle 3 mit dem Einstellstößel 13 zusammenwirkenden Bereich ihres Außenumfanges ist die Kurvenscheibe 7 in üblicher, nicht dargestellter Weise mit Rastnocken versehen, welche mit einem federnd rückverschieblich gelagerten Raststößel 18 zusammenwirken ; die einzelnen Drehstellungen der Welle 3 werden somit fühlbar rastiert.

Die Rohrleitung 15 ist an eine ständig aus einer nicht dargestellten Kompressoranlage mit Druckluft aufgeladene Hauptbehälterleitung 19 angeschlossen. Weiterhin ist noch eine durch den Zug zu kuppelnde Hauptluftleitung 20 vorgesehen, deren Druckverhalten in bekannter Weise nicht dargestellte, pneumatische Bremssteuerventile steuert, die ihrerseits die Druckluftbeaufschlagung von ebenfalls nicht dargestellten Bremszylindern für die Reibungsbremse überwachen. An den einzelnen Fahrzeugen sind Brems- und Lösemagnetventile 21 und 22 vorgesehen, welche bei ihrer Erregung eine Entlüftung der Hauptluftleitung 20 in die Atmosphäre bzw. eine Drucklufteinspeisung aus der Hauptbehälterleitung 19 in die Hauptluftleitung 20 steuern.

Die den Vorsteuerdruck führende Rohrleitung 17 ist an die Steuerkammer 23 eines Relaisventils 24 angeschlossen. Die Steuerkammer 23 ist mittels eines Kolbens 25 von einer Rücksteuerkammer 26 abgetrennt. Die Rücksteuerkammer 26 ist über eine Düse 27 mit einer Ventilkammer 28 verbunden, welche über eine Rohrleitung 29 großquerschnittig mit der Hauptluftleitung 20 in Verbindung steht. Der Kolben 25 ist mit einem Ventilrohr 30 verbunden, welches einerseits in die Ventilkammer 28 ragt und eine in deren Bereich angeordnete, übliche Ventileinrichtung 31 steuert, welche die Ventilkammer 28 aus einem mit der Hauptbehälterleitung 19 verbundenen Kammer 32 mit Druckluft zu füllen, in die Atmosphäre zu entlüften oder von diesen beiden Verbindungen abzusperren vermag. Im weiteren kann das Relaisventil 24 mit üblichen, bekannten Zusatzeinrichtungen versehen sein, es kann also beispielsweise dem aus der DE-AS 1 605 241 bekannten Relaisventil entsprechen. Andererseits ragt das Ventilrohr 30 ins Freie bzw. in einen Gehäuseteil 33, wo eine später zu erläuternde, elektrische Schalteinrichtung 34 angeordnet ist.

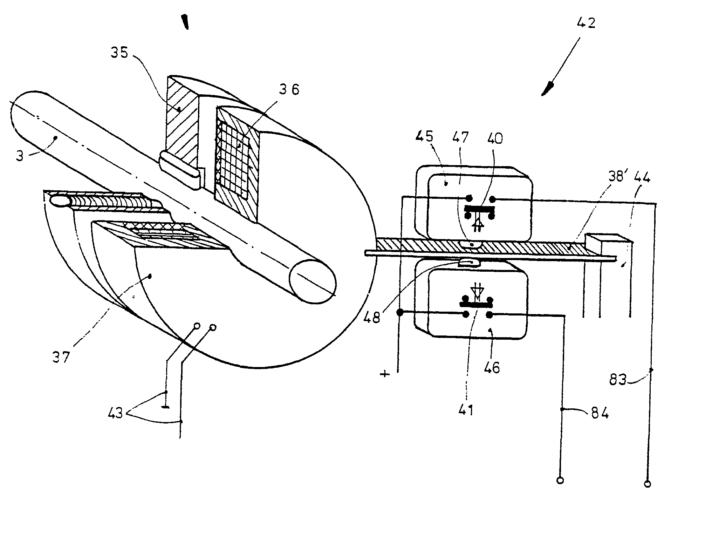

Die in Fig. 1 nur in einer prinzipiellen Aufbaumöglichkeit angedeutete Kupplung 4 des Vorsteuerventils 1 umfaßt ein mit der Welle 3 fest verbundenes Kupplungsteil 35, welches durch Erregen einer Magnetspule 36 in Art einer in ihrem Übertragungsdrehmoment begrenzten Reibungskupplung mit einem weiteren Kupplungsteil 37 kuppelbar ist. Das Kupplungsteil 37 trägt ein Schaltglied 38, das von beiden Seiten her durch je einen federnd rückverschieblichen, abgefangenen Stößel 39 belastbar ist ; das Schaltglied 38 und damit das Kupplungsteil 37 sind also entgegen elastische Federkräfte aus einer mittleren Ruhelage beidseitig auslenkbar. Weiterhin arbeitet das Kupplungsteil 37 mit zwei elektrischen Kontakten 40 und 41 zusammen, welche in der Ruhestellung des Schaltgliedes 38 geöffnet sind und deren einer Kontakt 40 bei Auslenkung des Schaltgliedes 38 in der einen und deren anderer Kontakt 41 bei Auslenkung in der anderen Richtung geschlossen wird. Eine konstruktive Ausführungsmöglichkeit der Kupplung 4 und der Ansteuerung der einer ersten, elektrischen Schalteinrichtung 42 zugehörenden Kontakte 40 und 41 ist der Fig. 2 entnehmbar : Gemäß Fig. 2 ist das eine Kupplungsteil 35 als Ringkörper ausgebildet, welches über eine Keil- bzw. Schraubverbindung fest mit der Welle 3 verbunden ist. Dicht benachbart zum Kupplungsteil 35 ist auf der Welle 3 drehbar das weitere, ebenfalls ringförmig ausgebildete Kupplungsteil 37 gelagert, welches die ringförmig ausgebildete Magnetspule 36 beinhaltet ; über elektrische Leitungen 43 ist die Magnetspule 36 erregbar. Eine das Schaltglied darstellende Blattfeder 38' ist mit ihrem einen Ende am Kupplungsteil 37 und mit ihrem anderen Ende an einem Festlager 44 eingespannt. Beiderseits des mittleren Bereiches der sich radial vom Kupplungsteil 37 nach außen erstreckenden Blattfeder 38' ist je ein Mikroschalter 45 bzw. 46 angeordnet. Die federnd rückverschieblich gelagerten Schaltstößel 47 und 48 der die Kontakte 41 beinhaltenden Mikroschalter 45 und 46 liegen beiderseits an der Blattfeder 38' an und können somit eine Teilfunktion der Stößel 39 nach Fig. 1 übernehmen.

Bei Drehung der Welle 3 gemäß Fig. 2 in der einen oder anderen Richtung — der Brems- bzw. Lösebetätigungsrichtung für das Vorsteuerventil 1 (Fig. 1) — wird das Kupplungsteil 35 mitgenommen. Bei unerregter Magnetspule 36 bleibt das Kupplungsteil 37 während dieser Drehbewegungen in seiner dargestellten, mittleren Ruhelage, welche durch die gestreckte Blattfeder 38' bestimmt ist und in welcher die beiden Kontakte 40 und 41 geöffnet sind. Bei Erregung der Magnetspule 36 folgt dagegen das Kupplungsteil 37 den Drehbewegungen des Kupplungsteiles 35 um bestimmte Drehwinkel nach, wobei die Blattfeder 38' aus ihrer gestreckten in eine nach der einen oder anderen Seite durchgebogene Form elastisch verformt wird. Bei diesem Verformen der Blattfeder 38' wird über den Schaltstößel 47 oder 48 einer der Kontakte 40 oder 41 geschlossen. Das Kupplungsteil 37 ist in diesem Zustand in einer Richtung elastisch aus seiner mittleren Ruhestellung ausgelenkt. Bei Abschalten der Erregung der Magnetspule 36 wird das Kupplungsteil 37 durch die Federkraft der Blattfeder 38 unter deren Streckung in die in Fig. 2 dargestellte, mittlere Ruhelage zurückgeführt, wobei sich der zuvor geschlossene Kontakt 40 bzw. 41 wieder öffnet. Beim Drehen der Welle 3 wird somit in Abhängigkeit von der Drehrichtung bei erregter Magnetspule 36 jeweils einer der der ersten Schalteinrichtung 42 zugehörenden Kontakte 40 oder 41 geschlossen und nach Abklingen der Erregung der Magnetspule 36 wieder geöffnet, wobei sowohl die Kupplung 4 wie die Schalteinrichtung 42 wieder in ihren Ausgangszustand zurückkehren.

Weiterhin umfaßt die Steuereinrichtung nach Fig. 1 eine Relaiseinrichtung 49 mit einem Bremsschütz 50, einem Löseschütz 51 und einem dritten, der Löseüberwachung dienenden Schütz 52. Das von einer Erregungsspule 53 betätigbare Bremsschütz 50 weist einen ersten Kontakt 54 auf, welcher in unerregtem Zustand geöffnet ist und welcher in eine Leitungsverbindung 55 von einer nicht dargestellten Stromquelle (+) zu einem Kabel eines Bremsstromkreises 56 eingeordnet ist. Weiterhin ist das Bremsschütz 50 mit zwei im erregten Zustand geöffneten Kontakten 57 und 58 ausgestattet. Das Löseschütz 51 weist eine Erregungsspule 59, einen im unerregten Zustand geöffneten Kontakt 60 zwischen der zur Stromquelle führenden Leitungsverbindung 55 und einem Abschnitt 61 des Lösestromkreises 62 sowie einen im unerregten Zustand geschlossenen Kontakt 63 auf. Das mit einer Spule 64 versehene Schütz 52 weist einen im unerregten Zustand geschlossenen Kontakt 65 und einen hierbei geöffneten Kontakt 66 auf.

Die zweite, mit dem Relaisventil 24 verbundene Schalteinrichtung 34 weist im Gehäuseteil 33 eine mit dem Ventilrohr 30 verbundene und mit diesem bewegliche Schaltplatte 67 auf, welche mittels einer Stiftführung 68 verdrehungssicher geführt ist. In die Schaltplatte 67 sind drei zum Ventilrohr 30 parallel verlaufende Schaltstößel 69, 70 und 71 axial verschieblich eingelassen. Die Schaltstößel 69, 70 und 71 sind jeweils von einer sich gegen die Schaltplatte 67 abstützenden, vorgespannten Feder 72 gleichgerichtet zur Druckbeaufschlagung des Kolbens 25 aus der Rücksteuerkammer 26 belastet und durch jeweils einen Anschlag 73 abgefangen. Die Schaltstößel 69, 70 und 71 enden jeweils vor den Betätigungsstößel 74, 75 bzw. 76, denen jeweils ein Kontakt 77, 78, bzw. 79 zugeordnet ist. In der dargestellten Mittellage des Kolbens 25 bei geschlossener Ventileinrichtung 31 ist der Kontakt 77 geöffnet, er schließt sich nur bei Verschiebung des Kolbens 25 unter überwiegender Druckbeaufschlagung von seiten der Steuerkammer 23 durch den Vorsteuerdruck. Der Kontakt 78 ist in der Mittellage ebenfalls geöffnet, er schließt sich jedoch bei Verschieben des Kolbens 25 unter überwiegender Beaufschlagung von seiten der Rücksteuerkammer 26 und damit des Hauptluftleitungsdruckes. Der Kontakt 79 ist ebenfalls in der Mittellage des Kolbens 25 geöffnet und schließt sich bei Verschiebung dieses Kolbens 25 unter überwiegender Hauptluftleitungsdruck-Beaufschlagung.

Von der an die Stromquelle angeschlossenen Leitungsverbindung 55 führt eine Zweigleitung 80 zum Vorsteuerventil 1 und ist dort mit jeweils einer Seite der Kontakte 8, 9 und 10 verbunden. Die beiden Kontakte 8 und 9 sind in der Fahrt- bzw. Lösestellung des Vorsteuerventils 1 geöffnet und in dessen Bremsstellungen, der Kontakt 8 bis zum Erreichen der Vollbremsstellung, der Kontakt 9 bis zum Erreichen einer Schnellbremsstellung, geschlossen. Der Kontakt 10 ist nur in der Schnellbremsstellung des Vorsteuerventils 1 geschlossen. Andererseits ist der Kontakt 8 mit den einen Seiten der beiden Kontakte 40 und 41 und mit einer Leitung 81 verbunden, welche über den Kontakt 63 des Löseschützes 51 und den Kontakt 58 des Bremsschützes 50 und eine weitere Leitung 82 zur andererseits geerdeten (—) Magnetspule 37 der Kupplung 4 mit deren elektrischen Leitungsanschlüssen 43 führt ; die Kontakte 8, 63 und 58 sind somit in Serie mit der Magnetspule 36 in einen Stromkreis eingeschaltet. Von der zweiten Seite des Kontaktes 40, welcher sich nur beim Drehen der Welle 3 vermittels des Handgriffes 2 in Richtung eines Einbremsens bzw. eines Verstärkens der bereits eingesteuerten Bremsung bei erregter Magnetspule 36 schließt, führt eine Leitung 83 zur zweiten Seite des Kontaktes 10 und, parallel hierzu, zur andererseits geerdeten Erregungsspule 53 des Bremsschützes 50. Von der zweiten Seite des sich nur beim Drehen der Welle 3 in Verstellrichtung zum Bremsenlösen und bei erregter Magnetspule 36 schließenden Kontaktes 41 führt eine Leitung 84 über den Kontakt 57 des Bremsschützes 50 zur andererseits geerdeten Erregungsspule 59 des Löseschützes 51. An die zweite Seite des Kontaktes 9 ist ein zu einer elektrodynamischen, nicht dargestellten Bremse führendes Kabel 85 angeschlossen. Vom Bremsstromkreis 56 zweigt nahe des Bremsschützes 50 eine Zweigleitung 86 ab, welche über den Kontakt 78 der zweiten Schalteinrichtung 34 und eine in dieser Stromflußrichtung öffnende Diode 87 zur Erregungsspule 53 bzw. der Leitung 83 führt. Vom Abschnitt 61 des Lösestromkreises 62 führt eine Leitung 88 zu den beiden Kontakten 77 und 79 der zweiten Schaltvorrichtung 34. Andererseits ist der Kontakt 77 über eine Leitung 89 und eine in dieser Stromflußrichtung öffnende Diode 90 mit der Leitung 84 zwischen den beiden Kontakten 41 und 57 und über parallel hierzu über eine dritte, ebenfalls in dieser Stromflußrichtung öffnende Diode 91 mit der Leitung 82 zwischen der Magnetspule 36 und dem Kontakt 58 verbunden. Die zweite Seite des Kontaktes 79 ist über eine Leitung 92 mit der andererseits geerdeten Spule 64 des Schützes 52 verbunden. Der Kontakt 66 ist in eine Verbindung 93 vom Abschnitt 61 des Lösestromkreises 62 zur Leitung 92 bzw. Erregungsspule 64 eingeordnet. Der Kontakt 65 ist zwischen den Abschnitt 61 und den Lösestromkreis 62 eingeordnet.

Vom Bremsstromkreis 56 aus ist über eine Leitung 94 das Bremsmagnetventil 21 und vom Lösestromkreis 62 aus über eine Leitung 95 das Lösemagnetventil 22 erregbar.

Im Ruhezustand bei gelösten Bremsen nehmen die Teile der Steuervorrichtung die aus Fig. 1 ersichtlichen Schaltstellungen ein. Das Vorsteuerventil 1 befindet sich in der Löse- bzw. Fahrtstellung, der Druckregler 14 steuert hierbei aus der Hauptbehälterleitung 19 in die Rohrleitung 17 und damit die Steuerkammer 23 des Relaisventils 24 einen der Regeldruckhöhe in der Hauptluftleitung 20 entsprechenden Vorsteuerdruck ein. Das Relaisventil 24 steuert demgemäß vermittels seiner Ventileinrichtung 31 in die Hauptluftleitung 20 Regeldruckhöhe ein und der Kolben 25 befindet sich bei sodann wieder geschlossener Ventileinrichtung 31 und gleich hoher Druckluftbeaufschlagung von beiden Seiten in seiner Mittelstellung. Am Vorsteuerventil 1 sind die Kontakte 8, 9, 10 sowie 40 und 41 geöffnet und die Magnetspule 36 ist unerregt. Die Schütze 50, 51 und 52 der Relaiseinrichtung 49 sind stromlos und ihre Kontakte befinden sich in den entsprechenden, beschriebenen und aus Fig. 1 ersichtlichen Schaltstellungen. Die Kontakte 77, 78 und 79 der zweiten Schalteinrichtung 34 sind ebenfalls geöffnet. Der Brems- und der Lösestromkreis 56 bzw. 62 sind stromlos und das Brems- sowie das Lösemagnetventil 21 bzw. 22 sind unerregt und geschlossen.

Wird zum Bremsen durch entsprechendes Drehen der Welle 3 vermittels des Handgriffes 2 das Vorsteuerventil 1 in Bremsrichtung verstellt, so schließen sich kurz vor Erreichen der der ersten Bremsstufe entsprechenden Drehstellung der Welle 3 die beiden Kontakte 8 und 9, so daß zum einen über das Kabel 85 die elektrodynamische Bremse eingeschaltet wird und zum anderen über den Kontakt 8 die beiden noch geöffneten Kontakte 40 und 41 einerseits an Spannung gelegt werden und zugleich über die Leitung 81 und die beiden geschlossenen Kontakte 63 und 58 sowie die Leitung 82 die Magnetspule 36 erregt wird. Beim Weiterdrehen der Welle 3 in die der ersten Bremsstufe entsprechende Drehstellung wird über die durch Erregen der Magnetspule 36 geschlossene Kupplung 4 das Schaltglied 38, wie vorstehend zu Fig. 2 beschrieben, aus seiner Ruhestellung ausgelenkt, wobei der Kontakt 40 geschlossen wird, während der Kontakt 41 geöffnet bleibt. Durch Schließen des Kontaktes 40 wird die Leitung 83 mit der Stromquelle verbunden, so daß die Erregungsspule 53 des Bremsschützes 50 erregt wird und den Kontakt 54 schließt sowie die beiden Kontakte 57 und 58 öffnet. Die Diode 87 schließt hierbei einen Stromfluß zum Kontakt 78 der zweiten Schaltvorrichtung 34 aus. Über den Kontakt 54 wird der Bremsstromkreis 56 an die Stromquelle angeschlossen und somit werden an den einzelnen Fahrzeugen über die Leitung 94 die Bremsmagnetventile 21 erregt und bewirken eine Entlüftung und damit Druckabsenkung für die Hauptluftleitung 20. Aus dem Bremsstromkreis 56 wird zugleich über die Zweigleitung 86 die eine Seite des Kontaktes 78 an Spannung angelegt. Gleichzeitig zu diesen Vorgängen wird über die Kurvenscheibe 7 der Druckregler 14 auf eine der ersten Bremsstufe entsprechende, verminderte Druckhöhe eingestellt, wodurch der in der Steuerkammer 23 des Relaisventils 24 herrschende Druck entsprechend gemindert wird. Da das vom Vorsteuerdruck gefüllte Volumen nur relativ gering ist, erfolgt die einen « Ansprung » beinhaltende und somit einen Mindestwert erreichende Druckabsenkung des Vorsteuerdruckes zum Einstellen der ersten Bremsstufe relativ rasch und der Kolben 25 wird demgemäß durch den sich nicht so rasch absenkenden und damit alsbald überwiegenden Druck in der Hauptluftleitung 20 und damit der Rücksteuerkammer 26 gemäß Fig. 1 nach rechts ausgelenkt. Bei dieser Auslenkung öffnet der Kolben 25 zum einen ein Auslaßventil der Ventileinrichtung 31 zum Entlüften der Hauptluftleitung 20 in die Atmosphäre und schließt zum anderen über die Schaltstößel 70 und 71 die beiden Kontakte 78 und 79 der zweiten Schalteinrichtung 34, während der Kontakt 77 unter Kompression der Feder 72 geöffnet bleibt. Über den Kontakt 78 wird hierbei ein Haltestromkreis für das Bremsschütz 50 geschlossen, dieser Haltestromkreis wird aus der Stromquelle über den geschlossenen Kontakt 54 und dem Bremsstromkreis 56 mit Strom versorgt und hält über die Zweigleitung 86, den geschlossenen Kontakt 78 und die Diode 87 die Erregungsspule 53 des Bremsschützes 50 mit der Stromquelle verbunden. Das Schließen des Kontaktes 79 hat dagegen keinerlei Auswirkungen. Das beim Anziehen des Bremsschützes 50 ebenfalls erfolgende Öffnen des Kontaktes 58 unterbricht den Erregungsstromkreis für die Magnetspule 36, so daß die Kupplung 4 öffnet und das Kupplungsteil 37 durch einen der Stößel 39 bzw. die Spannung der ausgelenkten Blattfeder 38' unter Öffnen des Kontaktes 40 wieder in die mittlere Ruhestellung zurückgedreht wird. Beim Öffnen des Kontaktes 40 wird die Erregungsspule 53 zwar seitens des Vorsteuerventils 1 von der Stromquelle abgetrennt, sie bleibt jedoch über den Haltestromkreis, umfaßend die Zweigleitung 86, den Kontakt 78 und die Diode 87, mit der Stromquelle verbunden und damit erregt, das Bremsschütz 50 bleibt also erregt und hält den Bremsstromkreis 56 mit der Stromquelle verbunden. Bei Erreichen einer der ersten Bremsstufe entsprechenden, verminderten Druckhöhe in der Hauptluftleitung 20 und damit der Rücksteuerkammer 26 kehrt der Kolben 25 in seine dargestellte Mittellage zurück, wobei die beiden Kontakte 78 und 79 geöffnet werden. Damit wird der Haltestromkreis für das Bremsschütz 50 unterbrochen, dieses fällt ab, schließt die beiden Kontakte 57 und 58 und öffnet den Kontakt 54. Der Bremsstromkreis 56 wird damit stromlos und das Bremsmagnetventil 21 fällt ab, so daß die Hauptluftleitung 20 nicht weiter über das Bremsmagnetventil 21 entlüftet wird. Zugleich kehrt die Ventileinrichtung 31 des Relaisventils 24 bei der Zurückbewegung des Kolbens 25 in die Mittellage in ihre Abschlußstellung zurück, so daß auch dort die Entlüftung der Hauptluftleitung 20 unterbrochen wird. Der in der Hauptluftleitung 20 erreichte, der ersten Bremsstufe entsprechende Druck bleibt damit erhalten. Das Schließen des Kontaktes 57 hat bei geöffnetem Kontakt 41 keine weitere Auswirkung, das Schließen des Kontaktes 58 schließt dagegen wieder den Erregungsstromkreis für die Magnetspule 36, so daß die Kupplung 4 wieder geschlossen wird. Falls der Handgriff 2 bei Erreichen der ersten Bremsstufe jedoch nicht weiterbewegt und die Welle 3 somit nicht weiter gedreht wurde bzw. nicht mehr gedreht wird, befindet sich das Schaltglied 38 in seiner mittleren Ruhestellung bei geöffneten Kontakten 40 und 41, so daß das Schließen der Kupplung 4 keine weiteren Auswirkungen zeigt. Damit ist die erste Bremsstufe erreicht.

Wird anfänglich nicht die erste Bremsstufe, sondern eine stärkere Bremsstufe bis zur Vollbremsung eingestellt, so spielen sich zu den vorstehend beschriebenen entsprechende Vorgänge ab, wobei lediglich die Welle 3 bis zum Erreichen der entsprechenden Bremsstufe verdreht und der Vorsteuerdruck sowie der Hauptluftleitungsdruck auf entsprechend niedrigere, der Bremsstufe entsprechende Drücke abgesenkt werden.

Soll, ausgehend von der ersten Bremsstufe, die Bremswirkung verstärkt werden, so kann dies feinfühlig in einer oder mehreren jeweils kleinen Stufen oder aber in einer relativ großen Stufe erfolgen. Im ersteren Fall, beim Verstärken um nur eine geringe Stufe, wird mittels des Handgriffes 2 die Welle 3 um nur einen geringen Betrag gedreht, wobei über die geschlossene Kupplung 4 das Schaltglied 38 wie bereits beschrieben ausgelenkt wird und den Kontakt 40 schließt. Das Bremsschütz 50 zieht an und erregt über den sich schließenden Kontakt 54 den Bremsstromkreis 56 sowie das Bremsmagnetventil 21, während es zugleich durch Öffnen des Kontaktes 57 eine Erregung des Löseschützes 51 ausschließt und durch Öffnen des Kontaktes 58 den Erregungsstromkreis für die Magnetspule 36 unterbricht. Das Öffnen der Kupplung 4 führt zu einem Rückstellen des Kupplungsgliedes 37 — auch bei sich noch etwas weiterdrehender Welle 3 — in die Mittelstellung durch die auf das Schaltglied 38 einwirkende bzw. von der Blattfeder 38 ausgeübte Rückstellkraft, wobei sich zugleich der Kontakt 40 wieder öffnet. Bei der geringen Brems-Verstärkungsstufe wird durch den Druckregler 14 der Vorsteuerdruck in der Rohrleitung 17 nur so gering abgesenkt, daß die entsprechend geringe Druckabsenkung in der Steuerkammer 23 nicht zum Auslenken des Kolbens 25 des Relaisventils 24 bis zum Schließen des Kontaktes 78 ausreicht, der Kontakt 78 bleibt also somit geöffnet und der vorstehend erwähnte Haltestromkreis für das Bremsschütz 50 ist somit beim Öffnen des Kontaktes 40 noch unterbrochen. Beim Öffnen des Kontaktes 40 fällt somit das Bremschütz 50 wieder ab und unterbricht die Stromversorgung zum Bremsstromkreis 56, so daß auch das Bremsmagnetventil 21 wieder schließt. Die Kontakte 57 und 58 schließen sich ebenfalls, wobei der Erregungsstromkreis für die Magnetspule 36 wieder geschlossen wird und die Kupplung sich somit — bei sich nicht mehr drehender Welle 3 — wieder schließt. Bei dieser kleinen Verstärkung der Bremsstufe mit entsprechend kleiner Drehbewegung der Welle 3 wird die zweite Schalteinrichtung 34 also nicht geschaltet, der Bremsstromkreis 56 wird nur kurzzeitig erregt und das Bremsmagnetventil 21 öffnet nur sehr kurzzeitig, so daß der in der Hauptluftleitung 20 herrschende Druck auch nur um einen geringen Betrag abgesenkt wird.

Wird die Bremsung dagegen um einen großen Wert verstärkt, so ist mittels des Handgriffes 2 die Welle 3 um einen entsprechend großen Betrag in Richtung Bremsen weiterzudrehen, wobei sich anfänglich die vorstehend geschilderten Vorgänge — Schließen des Kontaktes 40 und Erregen des Bremsschützes 50 — abspielen. Zugleich wird mittels des Druckreglers 14 jedoch der Vorsteuerdruck in der Leitung 17 und der Steuerkammer 23 rasch um einen beachtlichen Wert abgesenkt, welcher, wie zur ersten Bremsstufe beschrieben, zum Auslenken des Kolbens 25 nach rechts gemäß Fig. 1 ausreicht.

Der Kolben 25 öffnet bei seiner Auslenkung an der Ventileinrichtung 31 ein Entlüftungsventil für die Hauptluftleitung, so daß in diese eine örtliche, durch das Relaisventil 24 bewirkte Druckabsenkung eingesteuert wird, und schließt die beiden Kontakte 78 und 79. Während das Schließen des Kontaktes 79 keine weiteren Auswirkungen zeigt, wird durch das Schließen des Kontaktes 78 ein Haltestromkreis für das Bremsschütz 50 aktiviert ; Vom erregten Bremsstromkreis 56 fließt Strom durch die Zweigleitung 86, den Kontakt 78 und die Diode 87 zur Erregungsspule 53 des Bremsschützes 50, so daß dieses trotz Öffnen des Kontaktes 58 und damit Unterbrechen des Erregungsstromkreises für die Magnetspule 36, Öffnen der Kupplung 4 und Öffnen des Kontaktes 40 durch federndes Rückstellen des Kupplungsteiles 37 in dessen Mittellage erregt bleibt. Der Bremsstromkreis 56 mit dem Bremsmagnetventil 21 bleibt also erregt und aus der Hauptluftleitung 20 wird auch über das Bremsmagnetventil 21 zur Druckabsenkung Druckluft abgelassen. Es ergibt sich somit über die ganze Länge der Hauptluftleitung 20 eine rasche und gleichmäßige Druckabsenkung. Sobald diese Druckabsenkung des Hauptluftleitungsdruckes derjenigen entspricht, die mittels des Vorsteuerventils 1 bzw. dessen Druckregler 14 für den Vorsteuerdruck eingesteuert wurde, kehrt der Kolben 25 in seine dargestellte Mittellage unter Schließen der Ventileinrichtung 31 und Öffnen der Kontakte 78 und 79 zurück. Während das Öffnen des Kontaktes 79 ohne weitere Folgen bleibt, unterbricht das Öffnen des Kontaktes 78 den Haltestromkreis für das Bremsschütz 50. Das Bremsschütz 50 fällt daher ab und unterbricht die Stromversorgung zum Bremsstromkreis 56, so daß sich das Bremsmagnetventil 21 schließt. Damit ist die Entlüftung oder Druckabsenkung für die Hauptluftleitung 20 sowohl über das Relaisventil 24 wie das Bremsmagnetventil 21 beendet und der erreichte Bremsdruck bleibt bestehen.

Die Bremsverstärkung gemäß vorstehender Beschreibung kann sowohl in kleinen Schritten wie in großen Schritten mehrmals hintereinander bis zum Erreichen der vollen Bremswirkung auch miteinander vermischt, wiederholt werden.

Das nachfolgende Bremsenlösen kann ebenfalls in kleinen oder großen Schritten erfolgen:

Beim Einsteuern einer nur geringen Lösestufe wird die Welle 3 in Löserichtung um nur einen geringen Betrag gedreht, wobei über die geschlossene Kupplung 4 durch entsprechendes Mitnehmen des Kupplungsteiles 37 das Schaltglied 38 bzw. die Blattfeder 38' in Schließrichtung des Kontaktes 41 bewegt wird. Beim Schließen des Kontaktes 41 wird über die Leitung 84 und den geschlossenen Kontakt 57 die Erregungsspule 59 des Löseschützes 51 erregt, so daß sich dessen Kontakt 60 schließt und der Kontakt 63 öffnet. Durch Schließen des Kontaktes 60 wird über den Abschnitt 61 und den geschlossenen Kontakt 65 der Lösestromkreis 62 mit der Stromquelle verbunden, wodurch das Lösemagnetventil 22 erregt wird, öffnet, und aus der Hauptbehälterleitung 19 Druckluft in die Hauptluftleitung 20 zum Steigern des in dieser herrschenden Hauptluftleitungsdruckes einspeist. Die geringe Verstellung der Welle 3 bewirkt über den Druckregler 14 eine nur geringe Drucksteigerung des Vorsteuerdruckes in der Rohrleitung 17 und der Steuerkammer 23, so daß der Kolben 25 des Relaisventils 24 nur um höchstens geringe Werte gemäß Fig. 1 nach links aus seiner Mittellage ausgelenkt wird, die nicht ausreichen, den Kontakt 77 zu schließen. Die Kontakte 78 und 79 bleiben bei der Bewegungsrichtung nach links des Kolbens 25 sowieso geöffnet, da sich die Schaltstößel 70 und 71 hierbei von den Betätigungsstößen 75 und 76 abheben. Beim Öffnen des Kontaktes 63 wird der Erregungsstromkreis für die Magnetspule 36 unterbrochen, die Kupplung 4 öffnet sich und der Kontakt 41 wird durch Rückfedern des Betätigungsstößels 38 bzw. der Blattfeder 38' geöffnet, so daß der Erregungsstromkreis für das Löseschütz 51 wieder abfällt, der Kontakt 60 sich öffnet und der Kontakt 63 sich wieder schließt. Die Kupplung 4 wird somit durch Erregen der Magnetspule 36 wieder geschlossen, doch befindet sich zu diesem Zeitpunkt die nur um einen geringfügigen Betrag gedrehte Welle 3 wieder in Ruhe, so daß der Kontakt 41 geöffnet bleibt. Das Löseschütz 51 wird hierbei also nur sehr kurzzeitig erregt, so daß auch der Lösestromkreis 62 und das Lösemagnetventil 22 nur sehr kurzzeitig mit Strom versorgt werden. Über das Lösemagnetventil 22 wird somit nur eine geringe Druckluftmenge aus der Hauptbehälterleitung 19 in die Hauptluftleitung 20 eingespeist, so daß in dieser eine der gewünschten, geringen Lösestufe entsprechende, geringe Drucksteigerung erfolgt.

Beim Einsteuern einer großen Lösestufe wird die Welle 3 in Löserichtung um einen entsprechend großen Betrag verdreht, wobei anfänglich die vorstehend geschilderten Vorgänge bis zum Erregen des Löseschützes 51 und damit des Lösestromkreises 62 sowie des Lösemagnetventils 22 ablaufen. Zugleich wird jedoch der Druckregler 14 um einen großen Wert verstellt, so daß er in die Rohrleitung 17 und die Steuerkammer 23 eine beachtliche Steigerung des Vorsteuerdruckes einspeist und damit eine Verschiebung des Kolbens 25 nach links gemäß Fig. 1 bewirkt.

Dabei wird neben einem Öffnen der Ventileinrichtung 31 in Richtung eines Druckluftnachspeisens aus der Hauptbehälterleitung 19 in die Hauptluftleitung 20 der Kontakt 77 und damit ein Haltestromkreis für das Löseschütz 51 geschlossen:

Aus dem über den geschlossenen Kontakt 60 mit der Stromquelle verbundenen Abschnitt 61 und die Leitung 88, den geschlossenen Kontakt 77, die Leitung 79 und die Diode 90 wird die Erregungsspule 59 des Löseschützes 51 parallel zum Kontakt 41 mit der Stromquelle verbunden, so daß auch nach einem Öffnen des Kontaktes 41 das Löseschütz 51 erregt bleibt. Zugleich wird jedoch auch die Leitung 82 über den Kontakt 77, die Leitung 89 und die Diode 91 mit der Stromquelle verbunden, so daß beim Öffnen des Kontaktes 63 infolge des Erregens des Löseschützes 51 sowohl die Magnetspule 36 erregt und damit die Kupplung 4 geschlossen wie auch das Löseschütz 51 erregt und damit der Lösestromkreis 62 stromführend und das Lösemagnetventil 22 geöffnet bleiben. Die anhaltende Erregung der Kupplung 4 bei bereits erregtem Löseschütz 51 dient dem Zweck, daß beim Erfordernis einer plötzlichen Bremsung durch entsprechendes Verdrehen der Welle 3 in Bremsrichtung über die Kupplung 4 der Kontakt 40 geschlossen werden kann, auch wenn ein Lösevorgang mit erregtem Löseschütz 51 gerade abläuft. Das Schließen des Kontaktes 40, das wie zu den Bremsvorgängen bereits erläutert erfolgt, bewirkt ein Erregen des Bremsschützes 50, welches durch Öffnen des Kontaktes 57 jedenfalls, wie bereits erwähnt, die Erregung des Löseschützes 51 unterbricht und damit auch einen eventuell gerade in der beschriebenen Art ablaufenden Lösevorgang unterbricht. Ohne dieses plötzliche Einsteuern einer Bremsung läuft der Lösevorgang mit erregtem Löseschütz 51 weiter, bis der Hauptluftleitungsdruck auf eine dem Vorsteuerdruck entsprechende Druckhöhe angehoben ist und der Kolben 25 somit in seine Mittellage unter Schließen der Ventileinrichtung 31 und Öffnen des Kontaktes 77 zurückkehrt. Damit wird der Haltestromkreis sowohl für das Löseschütz 51 wie der Stromkreis für die Magnetspule 36 unterbrochen, das Löseschütz 51 öffnet den Kontakt 60 und schließt den Kontakt 63, der Lösestromkreis 62 wird stromlos und das Lösemagnetventil 22 fällt ab und unterbricht die Druckluftnachspeisung in die Hauptluftleitung 20. Das Schließen des Kontaktes 63 bewirkt wiederum ein Schließen der Kupplung 4, so daß nachfolgend weitere kleine oder große Stufen in Brems- oder Löserichtung in den vorstehend erläuterten Weisen einsteuerbar sind. Damit ist die große Lösestufe beendet.

Beim nachfolgenden Einstellen der Fahrt- oder Lösestellung am Vorsteuerventil 1 wird nach den vorstehend geschilderten Lösevorgängen entsprechendem Ansteuern des Löseschützes 51 in einer Zwischenstellung zwischen der der ersten Bremsstufe und der Fahr- bzw. Lösestellung entsprechenden Drehstellung der Welle 3 der Kontakt 8 geöffnet, wodurch die Kontakte 40 und 41 sowie die Leitung 81 von ihrer über die Zweigleitung 80 geführten Verbindung zur Stromquelle abgetrennt werden. Falls zu diesem Zeitpunkt der Kontakt 77 geöffnet ist, fällt auch das Löseschütz 51 ab und die Kupplung 4 öffnet sich, so daß die elektrisch gesteuerte Drucklufteinspeisung über das Lösemagnetventil 22 in die Hauptluftleitung unterbrochen wird. Falls zu dem erwähnten Zeitpunkt jedoch der Kontakt 77 geschlossen ist, das Relaisventil sich also in einer Lösestellung befindet und das Löseschütz 51 erregt ist, bleiben über den Kontakt 77 und die Dioden 90 und 91 sowohl die Erregungsspule 59 des Löseschützes 51 wie die Magnetspule 36 erregt und der elektrisch gesteuerte Lösevorgang mit erregtem Lösemagnetventil 22 läuft weiter, bis bei Druckgleichheit zwischen Vorsteuerdruck und Hauptluftleitungsdruck der Kolben 25 in seine Mittelstellung zurückkehrt und einerseits die Ventileinrichtung 31 schließt, andererseits den Kontakt 77 öffnet und somit die erwähnten Erregungen unterbricht. Da beim Erreichen der Fahrt- bzw. Lösestellung auch der Kontakt 9 wieder geöffnet und die elektrodynamische Bremse somit abgeschaltet wird, wird damit der Ausgangszustand wieder erreicht. Es ist noch festzustellen, daß auch hierbei bis zum Abfall des Löseschützes 51 die Kupplung 4 geschlossen bleibt und somit eine ständige Bereitschaft zum Einsteuern einer elektropneumatischen Bremsung durch Erregen des Bremsstromkreises 56 unter gleichzeitiger Zwangsunterbrechung des Lösestromkreises 62 bestehen bleibt.

An dem Brems- und Löseschütz 50 und 51 sind lediglich die Kontakte 54 und 60 für das Schalten größerer Stromstärken ausreichend zu dimensionieren, die restlichen Kontakte 57, 58 und 63 können als reine Steuerkontakte für nur schwache Ströme ausgebildet werden. Ebenso können die Kontakte 40 und 41 sowie 77, 78 und 79 für das Schalten nur schwacher Ströme ausgebildet werden. Die Dioden 87 und 90 schließen eine Überlastung der schwach dimensionierten Kontakte aus :

Sollte bei noch geschlossenem Kontakt 77 oder 78 einer der Kontakte 40 oder 41 geschlossen werden, so kann aus den Leitungen 83 oder 84 durch die Sperrwirkung der Dioden 87 bzw. 90 in dieser Stromflußrichtung kein Strom über die geschlossenen Kontakte 77 oder 78 zu dem Brems- bzw. Lösestromkreis 56 bzw. 62 mit dem dort auftretenden hohen Stromstärken fließen, der Brems- und der Lösestromkreis 56 und 62 sind nur durch die Kontakte 54 und 60 und, wie nachfolgend noch zu beschreiben, den Kontakt 65 schaltbar.

Beim Einstellen einer Schnellbremsung am Vorsteuerventil 1 wird der Kontakt 10 geschlossen und über diesen die Leitung 83 unter Umgehung des Kontaktes 40 mit der Stromquelle verbunden. Das Bremsschütz 50 wird somit in jedem Fall erregt und steuert eine elektropneumatische Bremsung durch Erregen des Bremsstromkreises 56 ein.

Das dritte Schütz 52 dient einem Ausschließen unerwünschter Folgen beim Auftreten von Fehlern in der Steuereinrichtung : Sollte aus irgendeinem Grunde das Löseschütz 51 in seiner erregten Stellung mit geschlossenem Kontakt 60 hängenbleiben, wie es beispielsweise durch mechanische oder elektrische Fehler vorstellbar ist, so wird durch andauernde Erregung des Lösestromkreises 62 und des Lösemagnetventils 22 der in der Hauptluftleitung 20 herrschende Druck ständig gesteigert. Ohne das dritte Schütz 52 ergäbe sich hierbei eine Überladung der Hauptluftleitung 20, ein nachfolgendes Einbremsen wäre durch die andauernde Erregung des Lösestromkreises 62 zumindest stark behindert, wenn nicht gar ausgeschlossen. Diese unerwünschten Folgen werden durch das dritte Schütz 52 ausgeschlossen :

Falls durch ständige Erregung des Lösestromkreises 62 der in der Hauptluftleitung 20 herrschende Druck über den Vorsteuerdruck in der Rohrleitung 17 und der Steuerkammer 23 ansteigt, wird der Kolben 25 des Relaisventils 24 gemäß Fig. 1 nach rechts verschoben, wobei zum einen über die Ventileinrichtung 31 eine örtliche Entlüftung der Hauptluftleitung 20 einsetzt, zum anderen aber auch der Schalter 79 der zweiten Schalteinrichtung 34 geschlossen wird. Aus dem Abschnitt 61 wird damit über die Leitung 88, den geschlossenen Kontakt 79 und die Leitung 92 die Spule 64 erregt, das Schütz 52 zieht an, öffnet den Kontakt 65 und schließt den Kontakt 66. Durch Öffnen des Kontaktes 65 wird die Stromführung des Lösestromkreises 62 unterbrochen, so daß das Lösemagnetventil 22 abfällt und keine weitere Drucksteigerung in die Hauptluftleitung 20 einspeist. Das Schließen des Kontaktes 66 ergibt eine Selbsthaltewirkung für das Schütz 52 über die Verbindung 93, so daß das Schütz 52 auch beim nachfolgenden Öffnen des Kontaktes 79 erregt bleibt und den Lösestromkreis 62 stromlos hält. Erst wenn bei einer nachfolgenden Reparatur oder durch sonstige Umstände das Löseschütz 51 wieder in seine unerregte Stellung zurückgeführt wird und der Kontakt 60 somit öffnet, fällt das Schütz 52 ab und schaltet in die aus Fig. 1 ersichtliche Schaltlage zurück.

In Abänderung zum vorstehend beschriebenen Ausführungsbeispiel ist es auch möglich, das Vorsteuerventil 1 ohne besonderen Mindestwert für die Druckabsenkung des Vorsteuerdruckes beim Übergang von der Fahrt- bzw. Lösestellung zur ersten Bremsstufe auszubilden ; in diesem Falle kann bereits das Einsteuern der ersten Bremsstufe durch nur kurzzeitiges Erregen des Bremsstromschützes 50 allein über den Kontakt 40, ohne Schließen des Kontaktes 78 und somit ohne Erregen des Haltestromkreises, in Art der vorstehend beschriebenen, feinfühligen Steuerung erfolgen.

Das Vorsteuerventil 1 und/oder das Relaisventil 24 können selbstverständlich mit den üblichen, bekannten Zusatzeinrichtungen ausgestattet sein : Beispielsweise kann das Vorsteuerventil 1 mit einem pneumatischen Schnellbremsventil zur direkten Entlüften der Hauptluftleitung 20, mit einem Absperr-Vorsteuerventil, einem Füllstoßventil, einer Angleicheinrichtung und/oder einer Totmannüberwachung ausgerüstet werden. Am Relaisventil 24 können entsprechende Einrichtungen, wie Absperrventil für die Hauptluftleitung, Füllstoß- und Angleicheinrichtung, fernsteuerbares Schnellbremsventil und/oder Totmanneinrichtung vorgesehen sein.

Selbstverständlich muß der die zweite Schalteinrichtung betätigende Kolben, nach Fig. 1 der Kolben 25, nicht dem Relaisventil 24 zugehören, vielmehr kann ein gesonderter, vom Hauptluftleitungsdruck entgegen dem Vorsteuerdruck beaufschlagter Kolben zur Steuerung der Schalteinrichtung 34 vorgesehen sein. In diesem Falle kann das Relaisventil 24 mitsamt der gesamten, pneumatischen Steuerungseinrichtung vollständig in üblicher, bekannter Bauweise ausgeführt sein.

Bei der Schalteinrichtung 34 muß im in Fig. 1 dargestellten Ausführungsbeispiel beim Auslenken des Kolbens 25 nach rechts, also bei überwiegendem Hauptluftleitungsdruck, die Feder 72 bei stehenbleibendem Schaltstößel 69 komprimiert werden. Es ist selbstverständlich möglich, die Betätigungseinrichtung für den Kontakt 77 durch beispielsweise räumliches Drehen um 180° derart auszubilden, daß bei der erwähnten Verschiebung sich der Schaltstößel 69 vom Betätigungsstößel 74 abhebt, so daß also nur in der Mittelstellung des Kolbens 25 der Schaltstößel 79 am Betätigungsstößel 74 zur Anlage gelangt und bei zur vorstehend erwähnten umgekehrter Auslenkrichtung des Kolbens 25, also gemäß Fig. 1 nach links bei überwiegender Druckbeaufschlagung durch den Vorsteuerdruck, den Kontakt 77 schließt. Bei dieser Ausbildung ergeben sich verringerte Bewegungswiderstände für den Kolben 25 in der beim Bremsen auftretenden Bewegungsrichtung.

Nur der Vollständigkeit halber soll noch erwähnt werden, daß der Brems- und der Lösestromkreis 56 und 62 sich selbstverständlich in üblicher Weise durch sämtliche, zu einem Zug gekoppelte Fahrzeuge erstrecken, wobei, wenn möglich, jedes Fahrzeug mit wenigstens einem Bremsmagnetventil 21 und einem Lösemagnetventil 22 zur örtlichen Steuerung des in der Hauptluftleitung 20 herrschenden Druckes ausgestattet ist.

Bezugszeichenliste

1 Vorsteuerventil
2 Handgriff
3 Welle
4 Kupplung
5 Nockenwalze
6 Zahnrad
7 Kurvenscheibe
8 Kontakt
9 Kontakt
10 Kontakt
11 Steuervorrichtung
12 Kabel
13 Einstellstößel
14 Druckregler
15 Rohrleitung
16 Raum
17 Rohrleitung
18 Raststift
19 Hauptbehälterleitung
20 Hauptluftleitung
21 Bremsmagnetventil
22 Lösemagnetventil
23 Steuerkammer
24 Relaisventil
25 Kolben
26 Rücksteuerkammer
27 Düse
28 Ventilkammer
29 Rohrleitung
30 Ventilrohr
31 Ventileinrichtung
32 Kammer
33 Gehäuseteil
34 Schalteinrichtung
35 Kupplungsteil
36 Magnetspule
37 Kupplungsteil
38 Schaltglied
38' Blattfeder
39 Stößel
40 Kontakt
41 Kontakt
42 1. Schalteinrichtung
43 elektr. Leitung
44 Festlager
45 Mikroschalter
46 Mikroschalter
47 Schaltstößel
48 Schaltstößel
49 Relaiseinrichtung
50 Bremsschütz
51 Löseschütz
52 3. Schütz
53 Erregungsspule
54 Kontakt
55 Leitungsverbindung
56 Bremsstromkreis

57 Kontakt
58 Kontakt
59 Erregungsspule
60 Kontakt
61 Abschnitt
62 Lösestromkreis
63 Kontakt
64 Spule
65 Kontakt
66 Kontakt
67 Schaltplatte
68 Stiftführung
69 Schaltstößel
70 Schaltstößel
71 Schaltstößel
72 Feder
73 Anschlag
74 Betätigungsstößel
75 Betätigungsstößel
76 Betätigungsstößel
77 Kontakt
78 Kontakt
79 Kontakt
80 Zweigleitung
81 Leitung
82 Leitung
83 Leitung
84 Leitung
85 Kabel
86 Zweigleitung
87 Diode
88 Leitung
89 Leitung
90 Diode
91 Diode
92 Leitung
93 Verbindung
94 Leitung
95 Leitung

**Patentansprüche**

1. Steuereinrichtung für elektropneumatische Druckluftbremsen von Schienenfahrzeuge, mit einem handbetätigbaren, einen Vorsteuerdruck überwachenden Vorsteuerventil (1) zur Steuerung eines Hauptluftleitungsdruckes, mit einer am Vorsteuerventil (1) angeordneten, nur während des Verstellens des Vorsteuerventils (1) in Löserichtung sich schließende Kontakte (41) aufweisenden, ersten elektrischen Schalteinrichtung (42) zur Ansteuerung einer eine Selbsthalteeinrichtung aufweisenden, die Erregung eines Brems- und eines Lösestromkreises (56 und 62) überwachenden, elektrischen Relaiseinrichtung (49), mit einer von einen vom Vorsteuer — entgegen dem Hauptluftleitungsdruck beaufschlagten Kolben (25) schaltbaren, zweiten elektrischen Schalteinrichtung (34) zum Überwachen der Relaiseinrichtung (49) und mit vom Brems- bzw. Lösestromkreis (56 und 62) erregbaren Magnetventilen (21 und 22) zur Steuerung des Hauptluftleitungsdruckes, dadurch gekennzeichnet, daß die erste Schalteinrichtung (42) weitere, sich nur beim Verstellen des Vorsteuerventils (1) in Bremsrichtung schließende Kontakte (40) aufweist, daß die Relaiseinrichtung (49) bei ihrer Ansteuerung die von den Kontakten (40, 41) der ersten Schalteinrichtung (42) überwachten Stromkreise direkt oder indirekt unterbrechende Kontakte (58, 63) aufweist, und daß die Selbsthalteeinrichtung von den Kontakten (77, 78) der zweiten Schalteinrichtung (34) ein- und ausschaltbar ist.

2. Steuereinrichtung nach Anspruch 1, dadurch gekennzeichnet, daß die erste Schalteinrichtung (42) ein über eine elektrisch schaltbare Kupplung (4) mit dem Handbetätigungsglied (2, 3) des Vorsteuerventils (1) kuppelbares, selbstrückstellendes Schaltglied (38, 38') für ihre Kontakte (40, 41) aufweist und daß der Schaltstromkreis der Kupplung (4) von der Relaiseinrichtung (49) überwacht ist.

3. Steuereinrichtung nach Anspruch 2, dadurch gekennzeichnet, daß die Kupplung (4) ein mit dem Handbetätigungsglied (2, 3) fest verbundenes Kupplungsteil (35) ein zu diesem relativverschiebliches, elastisch aus einer mittleren Ruhelage beidseitig auslenkbares Kupplungsteil (37) und eine bei ihrer Erregung beide Kupplungsteile (35, 37) koppelnde Magnetspule (36) aufweist und daß das auslenkbare Kupplungsteil (37) mit dem Schaltglied (38, 38') für die Kontakte verbunden ist.

4. Steuereinrichtung nach Anspruch 3, dadurch gekennzeichnet, daß die Kupplungteile (35, 37) als eine Verstellwelle (3) des Vorsteuerventils (1) umgebende Ringkörper ausgebildet sind (Fig. 2).

5. Steuereinrichtung nach Anspruch 4, dadurch gekennzeichnet, daß das Schaltglied als einerseits am auslenkbaren Kupplungsteil (37), andererseits an einem Festlager (44) eingespannte Blattfeder (38') ausgebildet ist und sich wenigstens annähernd radial auskragend vom Kupplungsteil (37) erstreckt und daß die Kontakte (40, 41) beiderseits der Blattfeder (38') etwa an deren Mittelabschnitt angeordnet sind (Fig. 2).

6. Steuereinrichtung nach Anspruch 1, wobei die Relaiseinrichtung (49) ein Brems- und ein Löseschütz (50, 51) mit jeweils den Brems- bzw. den Lösestromkreis (56, 62) überwachenden Kontakten (54, 60) aufweist, dadurch gekennzeichnet, daß das Brems- und das Löseschütz (50, 51) jeweils einen weiteren, Kontakt (58, 63) aufweisen und daß diese weiteren, entgegengesetzt zu den den Brems- bzw. Lösestromkreis (56, 62) überwachenden Kontakte (54, 60) schaltenden Kontakte (58, 63) in Serie in einen Stromkreis eingeordnet sind, der die von den Kontakten (40, 41) der ersten Schalteinrichtung (42) überwachten Stromkreise direkt oder indirekt zu unterbrechen vermag.

7. Steuereinrichtung nach Anspruch 3 und 6, dadurch gekennzeichnet, daß die weiteren Kontakte (58, 63) des Brems- und des Löseschützes (50, 51) in Serie mit einem nur in den Bremsstellungen des Vorsteuerventils (1) geschlossenen Schaltkontakte (8) in einen durch die Magnetspule (36) geführten Stromkreis eingeordnet sind.

8. Steuereinrichtung nach Anspruch 6 oder 7, dadurch gekennzeichnet, daß die zweite Schalteinrichtung (34) einen nur bei überwiegender Beaufschlagung des Kolbens (25) vom Vorsteuerdruck geschlossen, ersten Kontakt (77) aufweist, der in eine erste Leitungsverbindung (88, 89) eingeordnet ist, die vom Lösestromkreis (62) abzweigt und über eine in dieser Stromflußrichtung öffnende Diode (90) zur Erregungsspule (59) des Löseschützes (51) führt, und daß die zweite Schaltvorrichtung (34) einen nur bei überwiegender Beaufschlagung des Kolbens (25) von Hauptluftleitungsdruck geschlossenen, zweiten Kontakt (78) aufweist, der in eine vom Bremsstromkreis (56) abzweigende, über eine in dieser Stromflußrichtung öffnende Diode (87) zur Erregungsspule (53) des Bremsschützes (50) führende, zweite Leitungsverbindung (86) eingeordnet ist.

9. Steuereinrichtung nach Anspruch 8, dadurch gekennzeichnet, daß das Bremsschütz (50) einen dritten Kontakt (57) aufweist, der entgegengesetzt zu seinem dem Bremsstromkreis (56) überwachenden Kontakt (54) schaltet und der der Erregungsspule (59) des Löseschützes (51) unmittelbar vorgeschaltet ist.

10. Steuereinrichtung nach Anspruch 8, dadurch gekennzeichnet, daß die zweite Schalteinrichtung einen dritten Kontakt (79) aufweist, der mit dem zweiten Kontakt (78) schließt und der in eine dritte Leitungsverbindung (88, 92) eingeordnet ist, die vom Lösestromkreis (62) abzweigt und zur Spule (64) eines dritten, der Relaiseinrichtung (49) zugehörenden Schützes (52) führt, und daß das dritte Schütz (52) einen bei Erregung sich öffnenden, in den Lösestromkreis (62) nach der Abzweigung der ersten und dritten Leitungsverbindung (88, 89, 92) eingeordneten Kontakt (65) und einen entgegengesetzt schaltenden, in eine Verbindung von einem diesem Kontakt (65) unmittelbar vorgeordneten Abschnitt (61) des Lösestromkreises (62) zu seiner Spule (64) überwachenden, weiteren Kontakt (66) aufweist.

11. Steuereinrichtung nach Anspruch 8, 9 oder 10, mit einem vom Vorsteuerdruck gesteuerten Relaisventil (24) zur Steuerung des Hauptluftleitungsdruckes, dadurch gekennzeichnet, daß der Kolben (25) dem Relaisventil (24) zugehört und parallel zueinander die zweite Schalteinrichtung (34) und eine den Hauptluftleitungsdruck steuernde Ventileinrichtung (31) schaltet.

12. Steuereinrichtung nach Anspruch 11, dadurch gekennzeichnet, daß der Kolben (25) mit den Kontakten (77, 78, 79) der zweiten Schalteinrichtung (34) über vorgespannt abgefederte Schaltstößel (69, 70, 79) gekoppelt ist.

13. Steuereinrichtung nach Anspruch 2 und 8, dadurch gekennzeichnet, daß der Schaltstromkreis der Kupplung (4) über den ersten Kontakt (77) der zweiten Schalteinrichtung (34) und eine Diode (91) erregbar ist.

## Claims

1. Control device for electropneumatic compressed air brakes for rail vehicles with a pilot valve (1) that can be manually actuated and which monitors a precontrol pressure for controlling the main air brake pipe pressure with a first electric switching device (42) arranged at the pilot valve (1) that is provided with contacts (41) which only close during the adjustment process of the pilot valve (1) in release direction for control of an electric relay equipment (49) that is provided with a position-maintaining device which relay equipment monitors the energization of an electric brake and release circuit (56 and 62), with a second electric switching device (34) that can be actuated by a piston (25) which is loaded by the precontrol pressure which acts against the main air brake pipe pressure for monitoring the relay device (49) and with magnet valves (21 and 22) that can be energized by the electric brake and release circuit (56 and 62) respectively for controlling the main air brake pipe pressure, wherein the first switching device (42) is equipped with further contacts (40) which only close when the pilot valve (1) is adjusted in braking direction and wherein the relay device (49) is provided with contacts (58, 63) that break directly or indirectly the electric circuits monitored by the contacts (40, 41) of the first switching device when the said relay device (49) is triggered and wherein the position-maintaining device can be switched on and off by the contacts (77, 78) of the second switching device (34).

2. Control device according to Claim 1 wherein the first switching device (42) is provided with a self-resetting contact mechanism (38, 38') that can be coupled via an electrically engageable clutch (4) to the manual actuating mechanism (2, 3) of the pilot valve (1) for its contacts (40, 41) and wherein the electric control circuit of clutch (4) is monitored by the relay device (49).

3. Control device according to Claim 2 wherein clutch (4) is provided with a clutch member (35) that is rigidly fastened to the manual actuating mechanism (2, 3), a clutch member (37) that is moveable relative to the latter and that can be bilaterally diverted in a resilient way from a central rest position and with a magnet coil (36) that couples both clutch members (35, 37) when energized and wherein the clutch member (37) that can be diverted is connected with the contact mechanism (38, 38') for the contacts.

4. Control device according to Claim 3 wherein the clutch members (35, 37) are designed as an annular body that encompasses the control shaft (3) of the pilot valve (1) (Fig. 2).

5. Control device according to Claim 4, wherein the contact mechanism is designed as a leaf spring (38) that is clamped on one hand to the divertable clutch member (37) and on the other hand to a fixed bearing (44) and extends at least almost radially protruding from the clutch member (37) and wherein the contacts (40, 41) are arranged on both sides of the leaf spring (38') about at its middle section.

6. Control device according to Claim 1 wherein the relay device (49) is provided with a brake and release relay switch (50, 51) with the contacts (54, 60) monitoring respectively the electric brake and release circuit (56, 62) wherein the brake and release relay switches (50, 51) are fitted each with a further contact (58, 63) which switching contacts are, contrary to the contacts (54, 60) that monitor the electric brake and release circuit, arranged in series in an electric circuit that is able to break directly or indirectly the electric circuits monitored by the contacts (40, 41) of the first switching device (42).

7. Control device according to Claims 3 and 6 wherein the further contacts (58, 63) of the brake and release relay switch (50, 51) are arranged in series in an electric circuit carried by the magnet coil (36) with a switch contact (8) that is only closed in the brake positions of the pilot valve.

8. Control device according to Claim 6 or 7 wherein the second switching device (34) is provided with a first contact (77) that is only closed by the precontrol pressure in the event of the piston (25) being predominantly loaded whereby the said first contact is arranged in the first cable connection (88, 89) which bifurcates from the electric release circuit (62) and leads via a diode (90) that opens in this flow direction to the trip coil (59) of the release relay switch (51) and wherein the second switching device (34) is provided with a second contact (78) that is only closed in the event of piston (25) being predominantly loaded by the main air brake pipe pressure, whereby the said contact is fitted to a second cable connection (86) that branches off from the electric brake circuit (56) via a diode (87) that opens in this flow direction and leads to the trip coil (53) of the brake relay switch (50).

9. Control device according to Claim 8, wherein the brake relay switch (50) is provided with a third contact (57) that switches inversely to its contact (54) that monitors the electric brake circuit (56) and that is directly mounted upstream of the trip coil (59) of the release relay switch (51).

10. Control device according to Claim 8 wherein the second switching device is provided with a third contact (79) which closes together with the second contact (78) and that is fitted to a third connection cable (88, 92) that bifurcates from the electric release circuit (62) and leads to the coil (64) of a third relay switch (52) that belongs to the relay device (49) and wherein the third relay (52) is provided with a contact (65) that opens upon energization and is fitted into the electric release circuit (62) after bifurcation of the first and third cable connection (88, 89, 92) and with a further bucking contact (66) in a connection line of a section (61) directly upstream of this contact (65) that monitors the electric release circuit (62) towards its coil (64).

11. Control device according to Claim 8, 9 or 10 with a relay valve (24) controlled by the precontrol pressure for controlling the main air brake pipe pressure wherein the piston (25) is allocated to the relay valve (24) and controls in parallel to each other the second switching device (34) and a valve device (31) controlling the main air brake pipe pressure.

12. Control device according to Claim 11 wherein the piston (25) is coupled to the contacts (77, 78, 79) of the second switching device (34) via preloaded sprung actuating tappets (69, 70, 79).

13. Control device according to Claims 2 and 8, wherein the electric control circuit of clutch (4) can be energized via the first contact (77) of the second switching device (34) and a diode (91).

## Revendications

1. Dispositif de commande pour des freins à air comprimé électro-pneumatiques de véhicules sur rails, avec un distributeur pilote (1), susceptible d'être commandé manuellement, contrôlant une pression pilote pour commander la pression dans la conduite principale, avec un premier dispositif électrique de commutation (42) prévu dans le distributeur pilote (1), comportant des contacts (41) qui ne se ferment que pendant le déplacement du distributeur pilote (1) dans le sens du desserrage, pour l'attaque d'un dispositif électrique à relais (19) comportant un dispositif de maintien automatique et contrôlant l'excitation d'un circuit électrique de freinage et de desserrage (56 et 62), avec un second dispositif électrique de commutation (34), susceptible d'être commuté par un piston pilote (25) chargé à l'encontre de la pression qui règne dans la conduite principale, et servant à contrôler le dispositif à relais (49), et avec des électro-vannes (21 et 22) susceptibles d'être excitées par le circuit électrique de freinage et de desserrage (56 et 62), et servant à la commande de la pression dans la conduite principale, caractérisé par le fait que le premier dispositif de commutation (42) comporte des contacts supplémentaires (40) qui ne se ferment que lors du déplacement du distributeur pilote (1) dans le sens du freinage, que le dispositif à relais (49), comporte des contacts (58, 63) qui, lorsqu'il est attaqué, interrompent directement ou indirectement les circuits électriques contrôlés par les contacts (40, 41) du premier dispositif de commutation (42), et que le dispositif de maintien automatique est susceptible d'être branché ou débranché par les contacts (77, 78) du deuxième dispositif de commutation (34).

2. Dispositif de commande selon la revendication 1, caractérisé par le fait que le premier dispositif de commutation (42) comporte, pour ses contacts (40, 41), un organe de commutation (38, 38') à retour automatique, et susceptible d'être accouplé, par l'intermédiaire d'un accouplement commutable électriquement (4), à l'organe commandé manuellement (2, 3) du distributeur pilote (1), et que le circuit électrique de commutation de l'accouplement (4) est contrôlé par le dispositif à relais (49).

3. Dispositif de commande selon la revendication 2, caractérisé par le fait que l'accouplement (4) comporte un élément d'accouplement (35) relié rigidement à l'organe commandé manuellement (2, 3), un élément d'accouplement (37) mobile relativement au précédent, élastique et susceptible d'un débattement des deux côtés à partir de sa position médiane de repos, et une bobine magnétique (36) qui relie les deux éléments d'accouplement (35, 37) lorsqu'elle est excitée, et que l'élément d'accouplement (37) à débattement est relié à l'organe de commutation pour les contacts.

4. Dispositif de commande selon la revendication 3, caractérisé par le fait que les éléments d'accouplement (35, 37) sont réalisés sous la forme de corps annulaires qui entourent l'arbre de réglage (3) du distributeur pilote (1) (figure 2).

5. Dispositif de commande selon la revendication 4, caractérisé par le fait que l'organe de commutation est réalisé, d'une part, sous la forme d'un élément d'accouplement à débattement (37), et, d'autre part sous la forme d'une lame de ressort (38') encastrée au niveau d'un palier fixe (44), et s'étendant au moins au-delà de l'élément d'accouplement (37), et que les contacts (40, 41) sont disposés de part et d'autre de la lame de ressort (38') sensiblement au niveau de la section médiane de celle-ci (figure 2).

6. Dispositif de commande selon la revendication 1, dans lequel le dispositif à relais (49) comporte un contacteur de freinage et un contacteur de desserrage (50, 51) avec des contacts respectifs (54, 60) qui contrôlent le circuit électrique de freinage et le circuit électrique de desserrage (54, 60), caractérisé par le fait que le contacteur de freinage et le contacteur de desserrage (50, 51) comportent respectivement un contact supplémentaire (58, 63), et que ces contacts supplémentaires (58, 63) qui opèrent en sens contraire des contacts (54, 60) qui contrôlent le circuit électrique de freinage et de desserrage (56, 62), sont montés en série dans un circuit électrique capable de couper, directement ou indirectement, les circuits électriques qui sont contrôlés par les contacts (40, 41) du premier circuit de commutation (42).

7. Dispositif de commande selon la revendication 3 et 6, caractérisé par le fait que les contacts supplémentaires (58, 63) du contacteur de freinage et du contacteur de desserrage (50, 51) sont montés en série, avec un contact de commutation (8) qui est fermé seulement dans les positions de freinage du distributeur pilote (1), dans un circuit électrique qui passe par la bobine magnétique (36).

8. Dispositif de commande selon la revendication 6 ou 7, caractérisé par le fait que le second dispositif de commutation (34) comporte un premier contact (77) qui est fermé uniquement dans le cas d'une charge prépondérante du piston (25) par la pression pilote, ledit premier contact (77) étant disposé dans une première liaison électrique (88, 89) qui est dérivée du circuit électrique de desserrage (62) et qui mène, par l'intermédiaire d'une diode (90) qui est passante dans ce sens de passage du courant, à la bobine d'excitation (59) du contacteur de desserrage (51), et que le second dispositif de commutation (34) comporte un second contact (78) qui n'est fermé que dans le cas d'une charge prépondérante du piston (25) par la pression qui règne dans la conduite principale, ledit second contact (78) étant disposé dans une seconde liaison électrique (86) qui est dérivée du circuit électrique de freinage (56) et qui mène, par l'intermédiaire d'une diode (87) qui est passante dans ce sens de passage du courant, à la bobine d'excitation (53) du contacteur de freinage.

9. Dispositif de commande selon la revendication 8, caractérisé par le fait que le contacteur de freinage (50) comporte un troisième contact (57) qui commute en sens inverse de son contact (54) qui contrôle le circuit électrique de freinage (56), et qui est monté directement en amont de la bobine d'excitation (59) du contacteur de desserrage (51).

10. Dispositif de commande selon la revendication 8, caractérisé par le fait que le second dispositif de commutation comporte un troisième contact (79) qui ferme avec le second contact (78) et qui est monté dans une troisième liaison électrique (88, 92) qui est dérivée du circuit électrique de desserrage (62) et qui mène à la bobine (64) d'un troisième contacteur (52) qui appartient au dispositif à relais (49), et que le troisième contacteur (52) comporte un contact (65) qui s'ouvre lors de l'excitation et qui est monté dans le circuit électrique de desserrage (62), après la dérivation de la première et de la troisième liaison électrique (88, 89, 92), ainsi qu'un contact supplémentaire (66), commutant en sens opposé, qui contrôle une liaison entre une section (61) du circuit électrique de desserrage (62), prévue directement en amont de ce contact (65), et sa bobine (64).

11. Dispositif de commande selon la revendication 8, 9 ou 10, comportant une soupape de relais (24) commandée par la pression pilote, pour contrôler la pression dans la conduite principale, caractérisé par le fait que le piston (25) appartient à la soupape de relais (24), et commute en parallèle entre eux le second dispositif de commutation (34) et un dispositif à soupape (31) qui contrôle la pression qui règne dans la conduite principale.

12. Dispositif de commande selon la revendication 11, caractérisé par le fait que le piston (25) est accouplé avec les contacts (77, 78, 79) du second dispositif de commutation (34) par l'intermédiaire du poussoir de commutation (69, 70, 79) soumis à l'action de ressorts pré-armés.

13. Dispositif de commande selon la revendication 2 et 8, caractérisé par le fait que le circuit électrique de commutation de l'accouplement (4) est susceptible d'être excité par l'intermédiaire du premier contact (77) du second dispositif de commutation (34) et d'une diode (91).

Fig. 1

Fig 2